Europäisches Patentamt

European Patent Office

Office européen des brevets

(19)

(11) Veröffentlichungsnummer : **0 049 493**
**B1**

(12)      **EUROPÄISCHE PATENTSCHRIFT**

(45) Veröffentlichungstag der Patentschrift :
20.08.86

(51) Int. Cl.⁴ : **G 08 B 13/18**

(21) Anmeldenummer : 81107842.7

(22) Anmeldetag : 02.10.81

(54) **Infrarot-Einbruchdetektor.**

(30) Priorität : 06.10.80 CH 7441/80

(43) Veröffentlichungstag der Anmeldung :
14.04.82 Patentblatt 82/15

(45) Bekanntmachung des Hinweises auf die Patenterteilung : 20.08.86 Patentblatt 86/34

(84) Benannte Vertragsstaaten :
AT DE FR GB IT NL SE

(56) Entgegenhaltungen :
GB-A- 1 551 541
GB-A- 2 020 097
US-A- 3 398 281
US-A- 3 675 017
US-A- 4 068 811
US-A- 4 225 786
D.F.STOUT, Handbook of Operational Amplifier Circuit
Design, 1976, McGraw-Hill Book Company, USA, S. 4-
18 - 4-20
MESURES-REGULATION-AUTOMATISME, Band 40,
Nr. 5, Mai 1975, Seiten 13-17, Paris, FR., "Les mesures
de rayonnements par les capteurs pyroélectriques"

(73) Patentinhaber : **CERBERUS AG**
**Alte Landstrasse 411**
**CH-8708 Männedorf (CH)**

(72) Erfinder : **Genähr, Rudolf**
**Breitenloorstrasse 4**
**CH-8708 Männedorf (CH)**

(74) Vertreter : **Tiemann, Ulrich, Dr.-Ing.**
**c/o Cerberus AG Patentabteilung Alte Landstrasse**
**411**
**CH-8708 Männedorf (CH)**

Jouve, 18, rue St-Denis, 75001 Paris, France

## Beschreibung

Die Erfindung betrifft einen Infrarot-Einbruchdetektor mit einem pyroelektrischen Detektorelement und einer daran angeschlossenen Auswerteschaltung zur Alarmsignalgabe bei einer durch eine sich bewegende Person verursachten Bestrahlungsänderung des Detektorelementes.

Bei Infrarot-Einbruchdetektoren wird, wie beispielsweise in den US-Patentschriften N° 3.703 718 oder 4 058 726 beschrieben ist, die von einer Person ausgehende Infrarot-Strahlung in bestimmten Empfangsbereichen von einem geeigneten Detektorelement aufgenommen. Eine an dieses Detektorelement angeschlossene Auswerteschaltung gibt, wie beispielsweise in den US-Patentschriften N° 3 703 718 oder 4 179 691 erläutert wird, ein Alarmsignal, sobald sich die vom Detektorelement aufgenommene Infrarotstrahlung in einer für die Bewegung einer Person im Ueberwachungsbereich charakteristischen Weise ändert.

Als Detektorelement wurden in solchen Infrarot-Einbruchdetektoren bisher meist Sensoren verwendet, die ihren elektrischen Widerstand bei Bestrahlung ändern oder die bei Aufnahme von Infrarot-Strahlung eine Spannung an ihrem Ausgang abgeben, z. B. Bolometer, Fotowiderstände oder Fotoelemente. Die daran angeschlossenen Auswerteschaltungen enthielten an ihrem Eingang meist ein geeignetes Verstärkerelement, welches bei hochohmigen Sensoren meist als Feldeffekttransistor ausgebildet war. Um Bestrahlungsänderungen nachweisen zu können, war vor oder nach dem Eingangsverstärker meist ein Differenzierglied vorgesehen.

In letzter Zeit hat sich bei Infrarot-Einbruchdetektoren die Verwendung von pyroelektrischen Detektorelementen als vorteilhaft erwiesen. Solche Elemente sind auch in Folienform herstellbar und können dann bezüglich ihrer Abmessungen und Form dem vorgesehenen Verwendungszweck und bei Infrarot-Einbruchdetektoren speziell den gewünschten Empfangsbereichen besonders flexibel angepasst werden.

Vorbekannte pyroelektrische Detektoren, beispielsweise aus Einkristallen z. B. Lithium-Tantalat ($LiTaO_3$), Keramik, z. B. Blei-Zirkontitanat (PZT) oder Blei-Zirkonat-Eisen-Niobat, oder Folien aus Polyvinyldifluorid ($PVF_2$) bestehen aus einem ferroelektrischen Material, d. h. aus einem Dielektrikum mit einer bestimmten durch die Abmessungen und Dicke des Detektors gegebenen Kapazität. Bei Aufnahme von Infrarot-Strahlung erwärmt sich das Dielektrikum und es baut sich infolge der erzeugten Ladung eine elektrische Spannung auf. Diese ist abhängig vom pyroelektrischen Koeffizienten des Materials, der angibt, wieviel elektrische Ladung pro Fläche und pro Temperaturänderung erzeugt wird, sowie von der Kapazität des Detektorelementes, d. h. von der dielektrischen Konstanten des Materiales.

Bei der Auswertung dieser Ausgangsspannung des pyroelektrischen Detektors muss wegen des hohen Innenwiderstandes ein sehr hochohmiger Spannungsverstärker mit einem Eingangswiderstand von mindestens $10^{10}$ $\Omega$ verwendet werden. Dazu wird meist, wie aus GB-A 2 021 761 oder US 3 839 640 vorbekannt, ein Feldeffekttransistor benützt, dessen Gateelektrode direkt vom pyroelektrischen Detektor angesteuert wird. Nachteilig ist hierbei, dass wegen der hochohmigen Abnahme der Spannung ein grosses Widerstandsrauschen am Verstärkereingang auftritt und dass die Verbindung des Detektors zum Verstärker sehr empfindlich auf Streukapazitäten und auf elektrische Störungen ist.

Spezielle Abschirmmassnahmen und ein spezieller Einbau des Verstärkerelementes sind daher erforderlich. Ausserdem ist die Zeitkonstante des Detektors relativ gross und liegt in der Grössenordnung von Sekunden, wobei der Wert der Zeitkonstanten zudem von der Detektorkapazität, d. h. von den Abmessungen des Detektorelementes abhängig ist, was jeweils eine spezielle Anpassung erforderlich macht.

Ein weiterer Nachteil dieser mit einem hochohmigen Spannungsverstärker arbeitenden Auswerteschaltungen besteht darin, dass die durch eine Bestrahlungsänderung erzeugte Signalspannung auch von der Kapazität des Detektorelementes, also von der Dielektrizitätskonstanten des Materials, abhängig ist. Dies hat zur Folge, dass bei der Herstellung solcher Detektoren neben thermischen Eigenschaften, die durch die Konstruktion beeinflusst werden können, nicht allein der pyroelektrische Koeffizient, sondern auch die Dielektrizitätskonstante massgebend ist. Der besonders grosse pyroelektrische Koeffizient bestimmter Materialien, beispielsweise von Bleizirkontitanat kann daher nicht ausgenützt werden, da gleichzeitig die Dielektrizitätskonstante sehr hoch ist und solche Detektoren daher bei Verwendung bekannter Auswerteschaltungen ein kleineres Signal liefern, als Detektoren mit schlechteren pyroelektrischen Eigenschaften und kleiner Dielektrizitätskonstanten.

In der Zeitschrift Mesures regulation automatisme, Band 40, Nr. 5, Mai 1975, Seiten 13 bis 17 ist ein Artikel mit dem Titel « Les mesures de rayonnements par les capteurs pyroélectriques » veröffentlicht, in welchem ein Strahlungsdetektor beschrieben ist, bei dem die Auswerteschaltung einen Strom- bzw. Spannungsverstärker aufweist. Solange der pyroelektrische Sensor durch Strahlung beaufschlagt wird, erzeugt er ein elektrisches Signal, das im nachfolgenden Strom- oder Spannungsverstärker differenziert wird. Am Ausgang des Verstärkers stehen nur die differenzierten Signale zur Auswertung zur Verfügung, obwohl der pyroelektrische Sensor weiterhin mit Strahlung beaufschlagt wird. Die kurzzeitigen, differenzierten Signale bedeuten für die nachfolgende Auswertung einen Informationsverlust.

Ladungsverstärker und ihre Eigenschaften sind seit langem bekannt. Beispielsweise ist im Handbook of Operational Amplifier Circuit Design (David F. Stout ; 1976, McGraw-Hill Book Company ; S.4-18 bis 4-20) geoffenbart, dass Ladungsverstärker in Verbindung mit kapazitiven Detektoren besonders geeignet sind. Es wird ein Ladungsverstärker beschrieben, bei welchem ein Operationsverstärker mit einem gegengekoppelten Kondensator angewendet wird. Der Kondensator würde auch durch geringfügigste Ladungen, die am Eingang des Operationsverstärkers anstehen, aufgeladen werden. Zur Verhinderung der ständigen Aufladung des Kondensators ist in der beschriebenen Schaltung parallel zum Kondensator ein Entladungswiderstand angeordnet, der solche Ladungen ableitet.

Die Erfindung stellt sich die Aufgabe, die vorstehend erwähnten Nachteile vorbekannter Infrarot-Einbruchdetektoren zu vermeiden und speziell eine Auswerteschaltung für einen Einbruchdetektor mit einem pyroelektrischen Detektorelement zu schaffen, welche ein geringes Rauschen und eine erhöhte Empfindlichkeit aufweist, welche unempfindlich für Störungen ist und keine Abschirmung erfordert, welche unabhängig von der Kapazität des Detektorelementes ist und bei welcher die pyroelektrischen Eigenschaften des Materials optimal und mit verbessertem Wirkungsgrad ausgenützt werden.

Diese Aufgabe wird erfindungsgemäss bei einem Infrarot-Einbruchdetektor der eingangs definierten Art durch die im kennzeichnenden Teil des Patentanspruchs 1 definierten Merkmale gelöst. Bevorzugte Ausführungsformen der Erfindung sind in den abhängigen Patentansprüchen 2 bis 8 definiert.

Die Erfindung wird anhand des in den Figuren wiedergegebenen Schaltbildes von Ausführungsbeispielen der Erfindung beschrieben.

Figur 1 zeigt ein Blockschaltbild eines Einbruchdetektors.

Figur 2 zeigt ein Detailschaltbild eines Einbruchdetektors.

Figur 3 zeigt einen Fenster-Komperator.

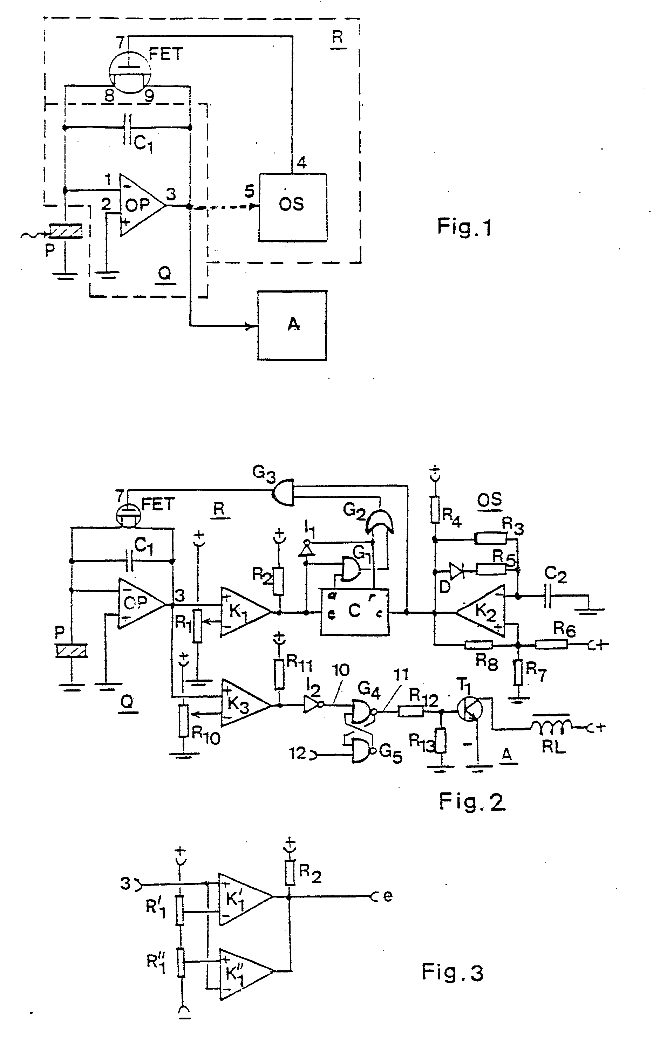

In Figur 1 bezeichnet P das Sensorelement eines Infrarot-Einbruchdetektors, dessen mechanische und optische Konstruktion beispielsweise der bereits erwähnten US-4 058 726 entsprechen kann. Das Sensorelement P ist aus einer der vorstehend erwähnten, an sich bekannten pyroelektrischen Materialien hergestellt, vorzugsweise, um einen optimalen Wirkungsgrad zu erzielen, aus einem Material mit besonders grossem pyroelektrischen Koeffizienten, z. B. Bleizirkontitanat. Während eine Elektrode des pyroelektrischen Detektorelementes P geerdet ist, ist die andere Elektrode mit dem Eingang eines Ladungsverstärkers Q in einer Auswerteschaltung verbunden.

Dieser Ladungsverstärker Q enthält einen Operationsverstärker OP, z. B. vom Typ CA-3 140 der RCA, dessen erster Steuereingang 1 mit der nicht-geerdeten Elektrode des pyroelektrischen Detektorelementes verbunden ist. Der Ausgang 3 des Operationsverstärkers OP ist über einen Kondensator $C_1$ mit dem Steuereingang 1 gegengekoppelt. An den Ausgang 3 des Operationsverstärkers OP ist weiterhin ein Alarmkreis A angeschlossen.

Die Wirkungsweise des Einbruchdetektors ist die folgende :

Das pyroelektrische Detektorelement P erzeugt infolge des polaren Aufbaus des ferroelektrischen Materials eine Polarisationsänderung und damit eine Oberflächenladung, sobald infolge einer Bestrahlung des Detektorelementes eine Temperaturänderung eintritt. Da diese Oberflächenladung in relativ kurzer Zeit durch den Messvorgang oder durch freie Ladungen aus der Luft kompensiert wird, ist die sich einstellende Oberflächenladung etwa proportional zur Bestrahlungsänderung. Ein Differenzeierglied, wie es bei vorbekannten Infrarot-Einbruchdetektoren erforderlich war, entfällt also bei Verwendung eines pyroelektrischen Detektorelementes.

Die am pyroelektrischen Detektorelement P auftretende Ladung wird nun statt mit einem Spannungsverstärker mit einem Ladungsverstärker Q ausgewertet, im Ausführungsbeispiel dargestellt ist ein kapazitiv gegengekoppelter Operationsverstärker. Da der Verstärkungsgrad solcher Operationsverstärker ausserordentlich gross ist, in der Regel über 10 000, wird die Ausgangsspannung des Operationsverstärkers OP nur abhängig von der am Detektorelement P gebildeten Ladung und von der Gegenkoppelungs-Kapazität $C_1$. Dagegen geht die Kapazität des Detektorelementes P nicht in das Ausgangssignal ein. Der besonders grosse pyroelektrische Koeffizient des gewählten Materials kann also voll und optimal ausgenützt werden, d. h. die Strahlungsempfindlichkeit eines mit einer solchen Auswerteschaltung ausgerüsteten Einbruchdetektors ist wesentlich verbessert.

Da das Detektorelement P praktisch in Kurzschluss betrieben wird, ist die Verbindung des Detektors P mit dem Ladungsverstärker Q extrem niederohmig und dadurch unempfindlich gegen elektrische Störungen. Auch Streukapazitäten gehen nicht ins Messergebnis ein. Der Vorverstärker muss daher nicht speziell abgeschirmt oder eingebaut werden. Wegen des Kurzschlussbetriebes entsteht auch kein Widerstandsrauschen am Verstärkereingang, und die elektrische Zeitkonstante des Detektors ist sehr klein. Da die Auswerteschaltung also sehr schnell arbeitet, können in der Signalauswertung untere und obere Grenzen für die zulässige Bewegungsgeschwindigkeit einer Person ziemlich frei gewählt werden. Wegen der Niederohmigkeit des Verstärkerausganges kann zudem die Ausgangsspannung besonders gut weiterverarbeitet werden.

Der Ladungsverstärker Q stellt praktisch einen integrierenden Verstärker dar. Auf dem Gegenkoppelungskondensator $C_1$ erscheint der zeitlich integrierte Kurzschlussstrom des Detektorelementes P als Kondensatorladung. Da sich dieser Kondensator daher durch Leckströme über längere Zeit aufladen kann, ist es zweckmässig, ihn periodisch auf Nullpotential zu bringen. Dazu ist eine Rückstelleinrichtung R vorgesehen, welche den Kondensator $C_1$ zu bestimmten Zeiten entlädt. Diese Rückstelleinrichtung R kann beispielsweise einen Impulsgenerator oder Taktgeber OS aufweisen, dessen Ausgang 4 die Gate-Elektrode 7 eines Feldeffekttransistors FET ansteuert, dessen Source-Drain-Pfad 8, 9 parallel zum Gegenkoppelungskondensator $C_1$ geschaltet ist.

Der Impulsgenerator oder Taktgeber OS kann so eingerichtet sein, dass er periodisch in vorbstimmten Zeitabständen an seinem Ausgang 4 einen Impuls abgibt, welcher den Feldeffekttransistor FET kurzzeitig leitend macht, so dass sich der Gegenkoppelungskondensator $C_1$ über den Feldeffekttransistor entladen kann. Bei einer zweckmässigen Weiterbildung der Erfindung kann der Impulsgenerator OS jedoch auch vom Ausgang 3 des Operationsverstärker OP angesteuert werden. Die Signalrückstellung des Gegenkoppelungskondensators $C_1$ kann dadurch in Abhängigkeit von Ausgangsspannung oder einem weiterverarbeiteten Signal derselben erfolgen. Dabei ist noch von Vorteil, dass auf diese Weise Spannungsspitzen ausgeschaltet werden können.

In Figur 2 ist der Aufbau der Elemente einer derart weitergebildeten Auswerteschaltung im Detail dargestellt. Dabei ist der Ausgang 3 des Operationsverstärkers OP mit dem positiven Eingang eines Komparators $K_1$ verbunden, der z. B. ein Teil eines Vierfach-Komparators vom Typ MM 74 C 99 von Motorola sein kann. Dessen negativer Eingang ist mit dem Abgriff eines zwischen Erde und einer positiven Spannung, z. B. + 12 V liegenden Potentiometers $R_1$ verbunden, und dessen Ausgang ist an den Eingang e eines Zählers C z. B. vom Typ CD 4 518, sowie an einen Widerstand $R_2$, der einen Wert von einigen k$\Omega$ besitzt, angeschlossen. Zugleich liegt der Ausgang des Komparators $K_1$ an einem Eingang eines AND-Gatters $G_1$ und über einen Inverter $I_1$ an einem Eingang eines OR-Gatters $G_2$, der zusätzlich mit dem Rückstelleingang r des Zählers C verbunden ist. Der Ausgang a des Zählers C ist mit dem anderen Eingang des AND-Gatters $G_1$ verbunden, dessen Ausgang wiederum mit dem anderen Eingang des OR-Gatters $G_2$ verbunden ist. Der Ausgang dieses OR-Gatters $G_2$ ist mit dem Eingang eines weiteren AND-Gatters $G_3$ verbunden, dessen anderer Eingang vom Oszillator OS angesteuert wird und dessen Ausgang an die Gate-Elektrode 7 des Feldeffekttransistors FET angeschlossen ist.

Der Oszillator OS besteht aus einem weiteren Komparator $K_2$, z. B. einem weiteren Teil eines Vierfach-Komparators MM 74 C 909. Der negative Eingang des Komparators $K_2$ liegt über die Widerstände $R_3$ von einigen M$\Omega$ und $R_4$ von einigen k$\Omega$ an positiver Spannung, wobei der Widerstand $R_3$ durch die Serieschaltung eines Widerstandes $R_5$ von einigen k$\Omega$ und einer Diode D überbrückt ist und der Abgriff der Serieschaltung der Widerstände $R_3$ und $R_4$ mit dem Ausgang des Komparators $K_2$ verbunden ist, so dass eine Rückkopplungsschaltung entsteht. Weiterhin liegt der negative Eingang des Komparators $K_2$ über einen Kondensator $C_2$ im nF-Bereich an Erde. Der positive Eingang des Komparators $K_2$ ist über drei Widerstände $R_6$, $R_7$ und $R_8$ im M$\Omega$-Bereich einerseits mit positiver Spannung, mit Erde und mit dem Komparatorausgang verbunden. Die gesamte Schaltung bildet einen Oszillator, welcher periodisch kurz-dauernde Impulse an den anderen Eingang des AND-Gatters $G_3$ abgibt.

Solange die Ausgangsspannung des Operationsverstärkers OP kleiner ist als die Schwellenspannung des Komparators $K_1$, bleibt dessen Ausgangsspannung auf Null. Dadurch wird über den Inverter $I_1$ und das OR-Gatter $G_2$ das AND-Gatter $G_3$ vorbereitet, so dass die Impulse des Oszillators OS passieren können. Gleichzeitig wird der Zähler C über den Rückstelleingang r auf Null gehalten, d. h. alle Zählerausgänge zeigen das Signal Null. Steigt jedoch die Ausgangsspannung des Operationsverstärkers OP über die Schwelle des Komparators $K_1$ an, so gibt dieser ein Ausgangssignal ab und das AND-Gatter $G_3$ wird über den Inverter $I_1$ und das OR-Gatter $G_2$ gesperrt. Gleichzeitig verschwindet das Rückstellsignal am Rückstelleingang r des Zählers C und dieser wird über den mit dem Komparator $K_1$ verbundenen Vorbereitungseingang e freigegeben, so dass nun die über den Zähleingang c die Impulse des Oszillators OS gezählt werden, die jedoch wegen des gesperrten AND-Gatters $G_3$ den Kondensator $C_1$ des Ladungsverstärkers Q nicht entladen können. Ist eine bestimmte vorgewählte Impulszahl erreicht, beispielsweise 2, 4, 8, 16 od. 64 Impulse, so erscheint am Ausgang a des Zählers C ein Signal, durch welches über das AND-Gatter $G_1$ und das OR-Gatter $G_2$ wiederum das AND-Gatter $G_3$ vorbereitet wird, so dass die Impulse des Oszillators OS den Ladungsverstärker Q wieder periodisch entladen können. Dasselbe geschieht, wenn die Ausgangsspannung des Operationsverstärkers OP wieder kleiner wird als die Schwellenspannung des Komparators $K_1$.

Die an den Ausgang 3 des Operationsverstärkers OP angeschlossene Alarmkreis A weist einen dritten Komparator $K_3$ auf, beispielsweise einen weiteren Teil eines Vierfach-Komparators MM 74 C 909, dessen positiver Eingang mit dem Ausgang des Operationsverstärkers OP und dessen negativer Eingang mit dem Abgriff eines weiteren zwischen Erde und positiver Spannung liegenden Potentiometers $R_{10}$ liegt. Der Ausgang des Komparators $K_3$ liegt über einen Widerstand $R_{11}$ von einigen K$\Omega$ an positiver Spannung und ist über einen weiteren Inverter $I_2$ mit der Alarmschaltung A verbunden. Diese enthält am Eingang 10 eine aus zwei kreuzweise rückgekoppelten NAND-Gattern $G_4$ und $G_5$, gebildete Flip-Flop-Schaltung. An deren Ausgang 11 bleibt ein Ausgangssignal bestehen, auch wenn das Signal am Eingang 10 des Flip-Flops verschwindet, solange es nicht durch einen Impuls am Rückstelleingang 12 zurückgestellt wird. Dieses Ausgangssignal wird über einen Widerstand $R_{12}$ im KΩ-Bereich der Basis eines Transistors $T_1$ mit einem Basiswiderstand $R_{13}$ zugeführt, an dessen Kollektorelektrode ein Alarmrelais RL angeschlossen ist.

Abwandlungen dieser Schaltung sind im Rahmen der Erfindung gemäss den Ansprüchen möglich und dem Fachmann geläufig.

Figur 3 zeigt beispielsweise einen Fensterkomparator, der den Komparator $K_1$ nach Figur 2 ersetzen kann. Statt eines einzigen Komparators sind dabei an den Ausgang 3 des Operationsverstärkers zwei Komparatoren $K_1'$ und $K_1''$ angeschlossen, der erste mit seinem positiven und der zweite mit seinem negativen Eingang. Die anderen Eingänge, d. h. der negative Eingang des ersten Komparators $K_1'$ und der positive Eingang des zweiten Komparators $K_1''$ liegen jeweils am Abgriff je eines Potentiometers $R_1'$ und $R_1''$, die zwischen positiver und negativer Spannung liegen. Der Ausgang der beiden Komparatoren $K_1'$ und $K_1''$ ist wiederum mit dem Steuereingang e des Zählers verbunden. Der Vorteil dieser Schaltung liegt darin, dass sowohl bei positiver als auch bei negativer Abweichung vom Normalwert, d. h. sowohl bei Ueberschreitung einer oberen Schwelle als auch bei Unterschreitung einer unteren Schwelle ein Signal ausgelöst wird. Eine solche Schaltung gestattet es, nicht nur ein gegenüber der Umgebung wärmeres Objekt nachzuweisen, sondern auch die Bewegung eines kälteren Objektes vor einem wärmeren Hintergrund.

**Patentansprüche**

1. Infrarot-Einbruchdetektor mit einem pyroelektrischen Detektorelement (P) und einer daran angeschlossenen Auswerteschaltung (Q, R) zur Alarmsignalgabe bei einer durch eine sich bewegende Person verursachten Bestrahlungsänderung des Detektorelementes, dadurch gekennzeichnet, dass die Auswerteschaltung einen Ladungsverstärker (Q), dessen Steuere Eingang (1) mit dem Ausgang des Detektorelementes (P) verbunden ist, aufweist, dass der Ladungsverstärker (Q) einen Operationsverstärker (OP), dessen Ausgang (3) über einen Kondensator ($C_1$) mit dessen vom Detektorelement (P) angesteuerten Eingang (1) gegengekoppelt ist, aufweist, und dass die Auswerteschaltung eine Rückstelleinrichtung (R), welche die Ausgangsspannung des Ladungsverstärkers (Q) nach bestimmten Zeitabständen rückstellt, aufweist.

2. Detektor gemäss Patentanspruch 1, dadurch gekennzeichnet, dass die Rückstelleinrichtung (R) einen Impulsgeber (OS) und ein von diesem auf Durchgang gesteuertes elektronisches Schaltelement (FET) aufweist, welches den Ausgang (3) und den Steuereingang (1) des Operationsverstärkers (OP) überbrückt.

3. Detektor gemäss Patentanspruch 2, dadurch gekennzeichnet, dass der Impulsgeber (OS) in vorbestimmten Zeitabständen Impulse abgibt.

4. Detektor gemäss Patentanspruch 2, dadurch gekennzeichnet, dass die Rückstelleinrichtung (R) vom Ausgang (3) des Operationsverstärkers (OP) so angesteuert wird, dass eine Impulsabgabe des Impulsgebers in Abhängigkeit von der Ausgangsspannung des Operationsverstärkers erfolgt.

5. Detektor gemäss Patentanspruch 4, dadurch gekennzeichnet, dass die Rückstelleinrichtung (R) eine Einrichtung (C) aufweist, die eine vorgegebene Anzahl Impulse des Impulsgebers unterdrückt, solange die Ausgangsspannung des Ladungsverstärkers (Q) einen einstellbaren Schwellenwert (R1) überschreitet.

6. Detektor gemäss einem der Patentansprüche 4 und 5, dadurch gekennzeichnet, dass an dem Ausgang (3) des Operationsverstärkers (OP) ein Komparator ($K_1$) angeschlossen ist, der ein Ausgangssignal abgibt, wenn sein Eingangssignal (3) eine vorgegebene Schwelle ($R_1$) überschreitet.

7. Detektor gemäss Patentanspruch 6, dadurch gekennzeichnet, dass der Ausgang des Komparators ($K_1$) das Schaltelement (FET) über den ersten Eingang eines AND-Gatters ($G_3$) ansteuert, dessen anderen Eingang vom Impulsgeber (OS) angesteuert wird, und gleichzeitig mit dem Steuereingang (e) eines die Impulse des Impulsgebers (OS) zählenden Zählers (C) verbunden ist, dessen Ausgangsimpulse (a) nach einer vorbestimmten Anzahl von Eingangsimpulsen (c) bei gleichzeitigem Vorhandensein eines Ausgangssignales (3) des Operationsverstärkers (OP) ebenfalls den ersten Eingang des AND-Gatters ($G_3$) ansteuert.

8. Detektor gemäss Patentanspruch 6, dadurch gekennzeichnet, dass der Komparator ein Fensterkomparator $K_1$, $K_1$, ist, der ebenfalls ein Ausgangssignal abgibt, wenn sein Eingangssignal (3) eine vorgegebene andere Schwelle unterschreitet.

**Claims**

1. Infrared intrusion detector comprising a pyroelectric detector element (P) and an evaluation circuit (Q, R) for giving an alarm signal in the event of a change in radiation of the detector element and caused by a moving object, characterized in that the evaluation circuit contains a charge amplifier (Q) and that the control input (1) of said charge amplifier is operatively connected with the output of said detector element (P) and further characterized in that said charge amplifier (Q) comprises an operational amplifier (OP) and that the output (3) of said operational amplifier is feedback coupled by means of a capacitor ($C_1$) with its input (1) controlled by the detector element (P) and finally characterized in that the evaluation circuit comprises a resetting device (R) for resetting, in accordance with certain time intervals the output voltage of the charge amplifier (Q).

2. Infrared intrusion detector according to patent claim 1, characterized in that the resetting device (R) comprises a pulse transmitter (OS) and an electronic switching element (FET) controlled by said pulse transmitter in order to place the electronic switching element into a conductive state the switching element bridging said output (3) and said control input (1) of the operational amplifier (OP).

3. Infrared intrusion detector according to patent claim 2, characterized in that the pulse transmitter (OS) is structured to deliver pulses at predetermined time intervals.

4. Infrared intrusion detector according to patent claim 2, characterized in that the resetting device (R) is controlled by the output (3) of the operational amplifier (OP) such that there is accomplished delivery of pulses of the pulse transmitter as a function of the output voltage of the operational amplifier.

5. Infrared intrusion detector according to patent claim 4, characterized in that the resetting device (R) comprises means (C) for suppressing a predetermined number of pulses of the pulse transmitter as long as the output voltage of the charge amplifier (Q) exceeds an adjustable threshold value ($R_1$).

6. Infrared intrusion detector according to anyone of the patent claims 4 and 5, characterized in that a comparator ($K_1$) is operatively connected to the output (3) of the operational amplifier (OP), and that said comparator delivers an output signal when its input signal (3) exceeds a predetermined threshold ($R_1$).

7. Infrared intrusion detector according to patent claim 6, characterized in that the output of the comparator ($K_1$) controls the switching element (FET) by means of the first input of an AND-Gate ($G_3$) the other input of said AND-Gate being controlled by the pulse transmitter (OS) and further characterized in that the output of said comparator ($K_1$) is operatively connected with the control input (e) of a counter (C) for counting the pulses of the pulse transmitter (OS), the output pulses (a) of said counter (C) controlling also the first input of said AND-Gate ($G_3$) after a predetermined number of input pulses (c) with simultaneous presence of an output signal (3) of the operational amplifier (OP).

8. Infrared intrusion detector according to patent claim 6, characterized in that the comparator is a window comparator ($K_1'$, $K_1''$) which delivers also an output signal when its input signal (3) falls below a predetermined different threshold value.

**Revendications**

1. Détecteur d'intrusion à infrarouge avec un élément-détecteur pyroélectrique (P) et un circuit d'évaluation (Q, R) qui y est relié et qui émet un signal d'alarme lors d'une modification de l'irradiation de l'élément-détecteur causée par une personne qui se déplace, caractérisé par le fait que le circuit d'évaluation comporte un amplificateur de charges (Q) dont l'entrée de commande (1) est reliée à la sortie de l'élément-détecteur (P), que l'amplificateur de charges (Q) comporte un amplificateur opérationnel (OP) dont la sortie est reliée, en montage à contre-réaction et par l'intermédiaire d'un condensateur ($C_1$), à son entrée (1) attaquée par l'élément-détecteur (P), et que le circuit d'évaluation comporte un dispositif de remise à l'état initial (R) qui ramène à sa valeur initiale la tension de sortie de l'amplificateur de charge, après des intervalles de temps déterminés.

2. Détecteur selon la revendication 1, caractérisé par le fait que le dispositif de remise à l'état initial (R) comporte un générateur d'impulsions (OS) et un élément de commutation électronique (FET) commandé dans son état passant par ledit générateur d'impulsions, lequel élément de commutation est monté en parallèle entre la sortie (3) et l'entrée de commande (1) de l'amplificateur opérationnel (OP).

3. Détecteur selon la revendication 3, caractérisé par le fait que le générateur d'impulsions (OS) émet des impulsions à des intervalles de temps prédéterminés.

4. Détecteur selon la revendication 2, caractérisé par le fait que le dispositif de remise à l'état initial (R) est attaqué de telle façon par la sortie (3) de l'amplificateur opérationnel (OP), qu'une émission d'impulsions du générateur a lieu en fonction de la tension de sortie de l'amplificateur opérationnel.

5. Détecteur selon la revendication 4, caractérisé par le fait que le dispositif de remise à l'état initial (R) comporte un dispositif (C) qui supprime un nombre prédéterminé d'impulsions du générateur d'impulsions, tant que la tension de sortie de l'amplificateur de charges (Q) dépasse une valeur de seuil (R1) réglable.

6. Détecteur selon l'une des revendications 4 et 5, caractérisé par le fait qu'à la sortie (3) de l'amplificateur opérationnel (OP) est relié un comparateur ($K_1$) qui émet un signal de sortie lorsque son signal d'entrée (3) dépasse un seuil prédéterminé ($R_1$).

7. Détecteur selon la revendication 6, caractérisé par le fait que la sortie du comparateur ($K_1$) commande l'élément de commutation (FET) par l'intermédiaire de la première entrée d'un circuit ET ($G_3$) dont l'autre entrée est attaquée par le générateur d'impulsions (OS) et est en même temps reliée à l'entrée de commande (e) d'un compteur (C) qui compte les impulsions du générateur d'impulsions (OS) et dont les impulsions de sortie (a) attaquent également la première entrée du circuit ET ($G_3$) après un nombre déterminé d'impulsions d'entrée (C) en présence simultanée d'un signal de sortie (3) de l'amplificateur opérationnel (OP).

8. Détecteur selon la revendication 6, caractérisé par le fait que le comparateur est un comparateur à fenêtre ($K_1'$, $K_1''$), qui émet également un signal de sortie lorsque son signal d'entrée (3) dépasse une autre valeur de seuil prédéterminée.

Fig.1

Fig. 2

Fig. 3